# EUROPÄISCHE PATENTSCHRIFT

(11) **EP 0 355 251 B1**
(45) Veröffentlichungstag und Bekanntmachung des Hinweises auf die Patenterteilung: **02.06.1993**
(21) Anmeldenummer: 89102955.5
(22) Anmeldetag: 21.02.1989
(51) Int. Cl.: B65G 13/06, B65G 39/02, B65G 23/08

(54) **Antriebsrolleneinheit**
Drive roller unit
Unité d'entraînement par rouleaux

(30) Priorität: 19.08.1988 DE 3828232
(43) Veröffentlichungstag der Anmeldung: 28.02.1990
(73) Patentinhaber: BAVARIA CARGO TECHNOLOGIE GMBH, D-80999 München (DE)
(72) Erfinder: Huber, Thomas, D-8127 Iffeldorf (DE)
(74) Vertreter: Bohnenberger, Johannes, Dr.

(56) Entgegenhaltungen:
- DE-A- 2 851 920
- DE-B- 2 635 828

## Beschreibung

Die Erfindung betrifft eine Antriebsrolleneinheit zum Antrieb von Gegenständen auf einer Förderbahn, mit wenigstens einer Antriebsrolle, die von einer Elektromotoranordnung über eine Getriebeanordnung drehend antreibbar ist und in ihrer Antriebsstellung mit der Unterseite des anzutreibenden Gegenstands im Eingriff steht. Derartige Antriebsrolleneinheiten sind allgemein bekannt (siehe z.B. DE-B-2 635 828).

Derartige Antriebsrolleneinheiten werden beispielsweise zum Antrieb von auf Rollenförderbahnen und Kugelförderbahnen bewegbaren Frachtbehältern eingesetzt. Ein bevorzugtes Anwendungsgebiet sind Frachtladesysteme im Luftfrachtverkehr, bei denen die Behälter im Laderaum eines Flugzeugs auf Rollen oder Kugelförderbahnen an die vorgesehenen Verankerungsplätze transportiert werden.

Eine Antriebsrolleneinheit der eingangs genannten Art ist beispielsweise in der europäischen Patentanmeldung EP-A-300 127 beschrieben, deren Inhalt als Stand der Technik nach Artikel 54(3) EPÜ gilt. Sie besitzt eine einzige Antriebsrolle, die durch eine in sie eingebaute Elektromotoranordnung zunächst aus einer unteren Ruhestellung so weit angehoben werden kann, bis sie an der Unterseite des anzutreibenden Gegenstands anliegt, der auf der Förderbahn weiterbewegt werden soll. In dieser angehobenen Stellung wird die bekannte Antriebsrolle dann durch dieselbe Elektromotoranordnung in Drehung versetzt, so daß sie auf die Unterseite des Gegenstandes eine Tangentialkraft ausübt, die ihn in einer Richtung in Bewegung versetzt, welche in etwa senkrecht zur Richtung der Drehachse der Antriebsrolle verläuft.

Beim Einladen von Frachtbehältern bzw. Containern in Flugzeugfrachträume ergibt sich nun aber das Problem, daß die langgestreckten Container, die häufig länger sind als die Breite des Flugzeugfrachtraums, mit der einen ihrer Schmalseiten voraus durch eine seitliche Ladeluke des Flugzeugs in den Frachtraum hineingeschoben und dann zuerst um 90° gedreht werden müssen, damit sie mit ihrer Längsachse parallel zur Flugzeuglängsachse an die vorgesehenen Verankerungsplätze weiterbewegt werden können. Zur Einführung der Container durch die Ladeluke und zum Drehen um 90° war nach dem Stand der Technik beispielsweise im Bereich der Ladeluke der Boden des Frachtraums mit einer Kugelförderbahn ausgestattet, die eine allseitige Bewegung und Drehung des Containers gestattet. In dieser Kugelförderbahn war eine größere Anzahl von Antriebsrollen angeordnet, die zwischen einer Ruhestellung und einer Arbeitsstellung angehoben bzw. abgesenkt werden können und andererseits in der Arbeitsstellung drehend antreibbar sind. Durch entsprechende Steuerung mit komplizierten elektronischen Steuerungsanordnungen konnte mittels einer derartigen Anordnung der Container in die Ladeluke hinein und während dieser Bewegung zugleich um 90° gedreht werden. Dies erfolgte dadurch, daß die einzelnen Rollenantriebseinheiten selektiv angehoben und abgesenkt wurden, wobei sie im abgesenkten Zustand um eine vertikale Achse eine Drehung ausführten und im angehobenen Zustand den Container entsprechend ihrer Drehstellung vorwärts bewegten.

In der Praxis erwies sich eine derartige Anordnung als kompliziert und kostspielig, sie war außerdem mit einem gerade im Luftfrachtverkehr unerwünscht hohen Gewicht behaftet und erwies sich als störanfällig.

Eine weitere Möglichkeit nach dem Stand der Technik bestand darin, insbesondere kleinere Container von Hand auf der im Bereich der Ladeluke angeordneten Kugelförderbahn zu bewegen und zu drehen. Anstelle von Kugelförderbahnen wurden auch flächige Anordnungen aus Lenkrollen verwendet.

Nach dem Stand der Technik war also einerseits ein erheblicher Aufwand erforderlich oder es mußte menschliche Arbeitskraft eingesetzt werden.

Ausgehend von diesem Stand der Technik liegt der Erfindung die Aufgabe zugrunde, eine Antriebsrolleneinheit der eingangs genannten Art zu schaffen, die bei einfachem, kostengünstigem Aufbau und geringem Gewicht in der Lage ist, die für eine Drehung des anzutreibenden Gegenstands erforderliche Richtungsänderung selbsttätig vorzunehmen.

Erfindungsgemäß wird diese Aufgabe bei einer Antriebsrolleneinheit der eingangs genannten Art dadurch gelöst, daß zwei drehend antreibbare Antriebsrollen vorgesehen sind, die in ihrer Antriebsstellung mit der Unterseite des anzutreibenden Gegenstands im Eingriff stehen, daß die beiden Antriebsrollen mit ihren Drehachsen im wesentlichen quer zur Antriebsrichtung des Gegenstands und in ihrer Axialrichtung nebeneinander angeordnet sind, daß die Getriebeanordnung ein Differentialgetriebe umfaßt, dessen Eingang von der Elektromotoranordnung angetrieben wird und dessen einer Ausgang die eine Antriebsrolle und dessen anderer Ausgang die andere Antriebsrolle antreibt, daß für wenigstens ein Ausgleichszahnrad des Differentialgetriebes eine Bremse vorgesehen ist, die das Ausgleichszahnrad bezüglich des Gehäuses des Differentialgetriebes mit einem definierten Bremsmoment bremst, das so bemessen ist, daß sich die beiden Antriebsrollen so lange gleichsinnig drehen, solange sich der anzutreibende Gegenstand im wesentlichen ungebremst bzw. ungehindert über die Antriebsrolleneinheit hinwegbewegen kann, und daß die beiden Antriebsrollen und das Differentialgetriebe in einer Halterung montiert sind, die bezüglich der Basis der Förderbahn um eine vertikale Achse drehbar gelagert ist.

Bei dieser erfindungsgemäßen Ausgestaltung ist also vorgesehen, jeweils für eine Antriebsrolleneinheit zwei zusammenwirkende Antriebsrollen vorzusehen, die über ein Differentialgetriebe miteinander gekoppelt sind. Der Erfindung liegt die Erkenntnis zugrunde, daß es möglich ist, die Bremsmomente an den Ausgleichszahnrädern des Differential- oder Ausgleichsgetriebes derart zu wählen, daß in einem ersten Betriebszustand der erfindungsgemäßen Antriebsrolleneinheit eine quasi "starre" Kopplung zwischen den beiden Ausgängen des Differentialgetriebes vorhanden ist, die bewirkt, daß sich die beiden Antriebsrollen gleichsinnig und in dem bevorzugten Fall, bei dem sie gleichen Außendurchmesser aufweisen, auch gleich schnell drehen. Sie wirken in diesem ersten Betriebszustand praktisch wie eine einzige Antriebsrolle, wie sie in der EP-A-300 127 beschrieben ist. Diesen Betriebszustand behält die erfindungsgemäße Antriebsrolleneinheit so lange bei, wie die Reaktionskräfte, die von dem anzutreibenden Gegenstand auf die beiden Antriebsrollen ausgeübt werden, ein durch die Bremsmomente an den Ausgleichszahnrädern des Differentialgetriebes vorgegebenes Maß nicht übersteigen. Diese Bremsmomente werden erfindungsgemäß so auf die Masse der anzutreibenden Gegenstände und auf die bei ihrer freien Bewegung auf der Förderbahn zu überwindenden Widerstände abgestimmt, daß die Antriebsrolleneinheit den oben beschriebenen ersten Betriebszustand so lange beibehält, wie der anzutreibende Gegenstand nicht durch äußere Einwirkung sehr stark abgebremst bzw. in seiner bisherigen Bewegungsrichtung blockiert wird. Diese Abbremsung erfolgt beispielsweise automatisch dann, wenn der einzuladende Container so weit durch die seitliche Ladeluke in den Frachtraum hineingefahren worden ist, daß er auf der der Ladeluke gegenüberliegenden Seite an die Seitenwand des Flugzeugs bzw. an eine dort angebrachte Führungseinrichtung anstößt und sich daher in der bisherigen Richtung quer zum Frachtraum nicht mehr weiterbewegen kann.

Durch die dabei auftretende starke Abbremsung der Antriebsrolle werden die Bremsmomente an den Ausgleichszahnrädern des Differentialgetriebes überwunden und die bisherige, quasi "starre" Kopplung zwischen den beiden Antriebsrollen wird aufgehoben. Die Antriebsrolleneinheit geht dadurch selbsttätig in einen zweiten Betriebszustand über, in welchem die beiden Antriebsrollen beginnen, sich in entgegengesetzte Richtungen zu drehen, wie dies bei den Ausgängen eines Differential- bzw. Ausgleichgetriebes bekanntermaßen geschieht, wenn der eine der beiden Ausgänge festgehalten oder sehr stark abgebremst wird.

Bei der erfindungsgemäßen Antriebsrolleneinheit behält die eine der beiden Antriebsrollen in diesem zweiten Betriebszustand ihre bisherige Drehrichtung bei, während die andere Antriebsrolle beginnt, rückwärts zu laufen. Aufgrund dieser gegenläufigen Drehbewegungen der weiterhin an die Unterseite des zu bewegenden Gegenstandes bzw. Containers angedrückten Antriebsrollen entsteht ein Drehmoment um eine vertikale Achse, das wegen der drehbaren Lagerung der Antriebsrolleneinheit um eine vertikale Achse zu einer entsprechenden Drehbewegung führt, welche die Antriebsrolleneinheit in eine neue Winkelstellung zur Längsachse des Frachtraums bringt. Diese Drehbewegung hält so lange an, bis die Antriebsrolleneinheit eine Lage einnimmt, in der sich der Gegenstand wieder zumindest ein Stück weit ungehindert oder weniger stark gebremst in der durch die neue Winkelstellung der Antriebsrolleneinheit vorgegebenen Vorwärts-Bewegungsrichtung weiterbewegen kann, wobei der gleichzeitig etwas in die neue Antriebsrichtung der Antriebsrolleneinheit um eine Vertikalachse gedreht wird. Da in dieser neuen Stellung die von außen her den Gegenstand stark abbremsenden bzw. an seiner Weiterbewegung völlig hindernden Kräfte wegfallen oder zumindest gemindert sind, übt der Gegenstand auf die Antriebsrolleneinheit geringere Reaktionskräfte aus, so daß die erfindungsgemäße Antriebsrolleneinheit automatisch wieder in den ersten Betriebszustand zurückfällt, in dem sich die beiden Antriebsrollen in der gleichen Vorwärtsrichtung drehen. Dabei wird im allgemeinen noch keine vollständige Drehung des anzutreibenden Gegenstands um 90° erreicht worden sein. Vielmehr wird der vorstehend erläuterte Vorgang wiederholt, wobei der Gegenstand wiederum an der Laderaumwand bzw. an einem entsprechenden Anschlag anstößt und dadurch die erfindungsgemäße Antriebsrolleneinheit wieder in den zweiten Betriebszustand übertritt und sich dadurch weiter um die vertikale Achse dreht.

Dieser Wechsel zwischen den beiden Betriebszuständen kann mehrfach erfolgen, bis der zu bewegende Gegenstand schließlich genügend weit, beispielsweise um 90° gedreht ist, und sich in dieser neuen Lage ungehindert in Längsrichtung des Frachtraums bis zu dem vorgesehenen Verankerungsplatz weiterbewegen kann.

Aus der vorstehenden Erläuterung geht hervor, daß die Drehung der Antriebsrolleneinheit selbsttätig durch das Wechselspiel der aufeinander abgestimmten Bremsmomente erfolgt, ohne daß hierfür von außen her mit Hilfe beispielsweise einer elektronischen Steuerung eingegriffen werden müßte.

Bei einer bevorzugten Ausführungsform der erfindungsgemäßen Antriebsrolleneinheit ist vorgesehen, daß der Eingang des Differentialgetriebes das eine von zwei einander gegenüberliegenden Tellerrädern ist, die durch die Ausgleichszahnräder miteinander verbunden sind, daß das andere der beiden Tellerräder den einen Ausgang des Differentialgetriebes bildet, der die eine der beiden Antriebsrollen antreibt, und daß das Gehäuse des Differentialgetriebes den anderen Ausgang des Differentialgetriebes bildet, der die andere der beiden Antriebsrollen antreibt.

Ferner ist es bevorzugt, daß eine Bremse vorgesehen ist, die die Halterung bei ihrer Drehung um die vertikale Achse bezüglich der Basis der Förderbahn mit einem definierten Bremsmoment bremst.

Besonders vorteilhaft ist eine Ausführungsform, bei der vorgesehen ist, daß die Drehachsen der beiden Antriebsrollen zueinander parallel sind, wobei als Sonderfall vorgesehen werden kann, daß die Drehachsen der beiden Antriebsrollen miteinander fluchtend koaxial sind und daß die beiden Antriebsrollen die Außenform von Kreiszylindern mit gleichem Durchmesser besitzen.

Eine besonders geringe Bauform läßt sich dadurch erzielen, daß die Elektromotoranordnung, die Getriebeanordnung, das Differentialgetriebe und die Bremse im Inneren der als Hohlkörper ausgebildeten Antriebsrollen angeordnet sind.

Besonders vorteilhaft ist eine Ausführungsform, bei der vorgesehen ist, daß der Rotor der Elektromotoranordnung über ein Untersetzungsgetriebe und das Differentialgetriebe einen mit einem Ausgang des Differentialgetriebes gekoppelten Innenzahnkranz einer Antriebsrolle antreibt, und daß der andere Ausgang des Differentialgetriebes einen Innenzahnkranz der anderen Antriebsrolle antreibt.

Eine besondere Vereinfachung des Aufbaus und der Steuerung ist bei einer erfindungsgemäßen Antriebsrolleneinheit gegeben, bei der vorgesehen ist, daß die Antriebsrolleneinheit derart ausgebildet ist, daß sich ihre beiden Antriebsrollen beim Einschalten der Elektromotoranordnung selbsttätig aus einer unteren Ruhestellung in eine obere Antriebsstellung anheben, in der sie mit der Unterseite des anzutreibenden Gegenstands im Eingriff stehen.

Die Erfindung wird im folgenden beispielsweise unter Bezugnahme auf die Zeichnung näher erläutert; es zeigt:
- Fig. 1 und 2: eine schematische Draufsicht auf einen Teil eines Flugzeugladeraums, durch dessen Ladeluke ein Container in den Laderaum hineinbewegt wird;
- Fig. 3: eine sehr vereinfachte und schematisierte Darstellung einer Antriebsrolleneinheit zur Erläuterung des erfindungsgemäßen Aufbaus und Funktionsprinzips;
- Fig. 4: eine perspektivische Darstellung einer praktischen Ausführungsform einer Antriebsrolleneinheit; und
- Fig. 5: eine in Einzelheiten vereinfachte axiale Schnittdarstellung der praktischen Ausführungsform der Antriebsrolleneinheit gemäß Fig. 4.

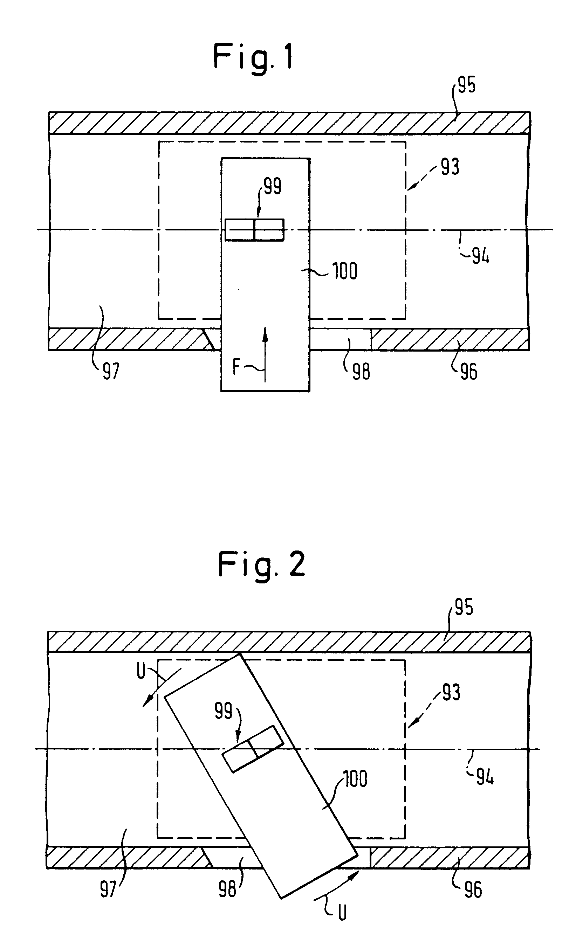

In den Fig. 1 und 2 ist eine Anwendungssituation einer erfindungsgemäßen Antriebsrolleneinheit dargestellt.

Die Fig. 1 und 2 zeigen in schematisierter Draufsicht den Eingangsbereich des Frachtladeraums 97 eines Flugzeugs, in den ein Container 100 eingeladen werden soll. Zunächst wird der Container 100 auf einer nicht dargestellten Rollenförderbahn oder einer Kugelförderbahn herangeführt und in die Ladeluke 98 des Frachtladeraums 97 hineinbewegt. Im Bereich der Ladeluke 98 ist der Boden des Frachtladeraums 97 beispielsweise mit einer Kugelförderbahn oder einer anderen Förderbahn ausgestattet, die eine allseitige Bewegung des Containers 100 gestattet. In den Fig. 1 und 2 ist der Bereich der Kugelförderbahn 93 als gestricheltes Rechteck angedeutet.

Auf dieser Kugelförderbahn kann der Container 100 zunächst mit verhältnismäßig geringem Kraftaufwand senkrecht zur Flugzeuglängsachse in den Frachtladeraum 97 hineinbewegt werden, wie durch den Pfeil F in der Fig. 1 gezeigt. Im Bereich der Kugelförderbahn 93 ist mindestens eine, vorzugsweise aber mehrere erfindungsgemäße Antriebsrolleneinheiten 99 angeordnet, von denen in den Fig. 1 und 2 die wenigstens eine symbolisch gezeigt ist.

Wie die Fig. 1 zeigt, wird also der Container 100 zuerst in Richtung des Pfeiles F mit seiner Schmalseite voraus, d.h. mit seiner Längsrichtung senkrecht zur Flugzeuglängsachse 94 durch die Ladeluke 98 in den Frachtraum 97 hineinbewegt. Die Länge des Containers 100 in dieser Bewegungsrichtung ist jedoch größer als die Breite des Frachtraums 97, d.h. größer als der lichte Abstand zwischen der in den Fig. 1 und 2 unten liegenden vorderen Seitenwand 96 des Flugzeugrumpfes und der oben liegenden hinteren Seitenwand 95. Der Container 100 muß also um eine oder mehrere vertikale Achsen in Richtung der Pfeile U in der Fig. 2 gedreht werden, damit er sich durch die Ladeluke 98 hindurchbewegen und im Inneren des Laderaums 97 mit seiner Längsachse parallel zur Flugzeuglängsachse 94 ausrichten kann.

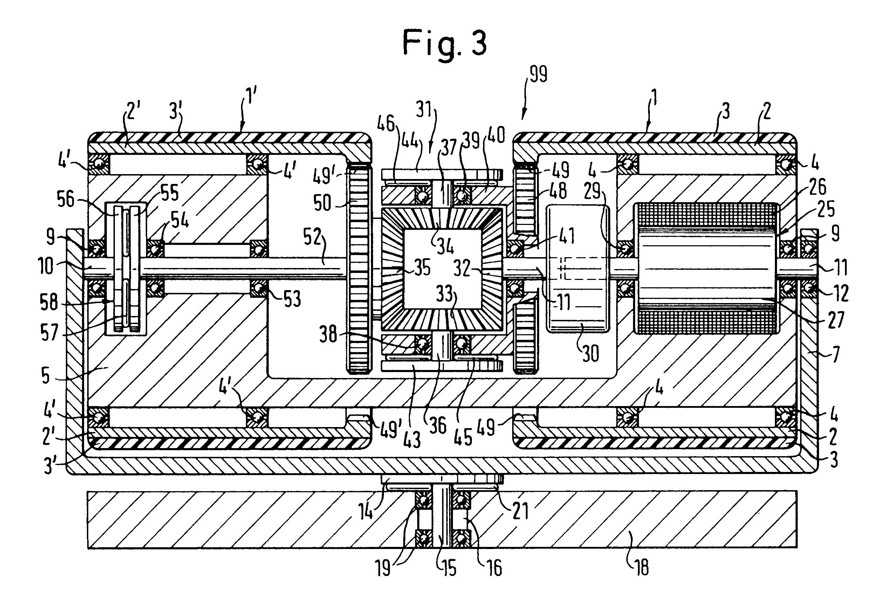

Bevor nun beschrieben wird, wie sowohl das Hineinbewegen des Containers 100 in den Frachtraum 97 in Richtung des Pfeiles F als auch seine Drehung um 90° mit Hilfe einer oder mehrerer erfindungsgemäßer Antriebsrolleneinheiten 99 erfolgt, wird zuerst deren prinzipieller Aufbau anhand der schematischen Darstellung der Fig. 3 erläutert.

Wie in der sehr stark schematisierten Darstellung der Fig. 3 gezeigt ist, umfaßt die Antriebsrolleneinheit 99 zwei koaxial nebeneinander angeordnete Antriebsrollen 1, 1' gleichen Durchmessers, von denen jede aus einem inneren, im wesentlichen als Hohlzylinder ausgebildeten Rollenkörper 2, 2' und einem die Außenfläche des Rollenkörpers 2, 2' bedeckenden Rollenmantel 3, 3' aus abriebfestem elastischem Material besteht.

Die beiden Antriebsrollen 1, 1' sind mit Hilfe von Lagern 4, 4', die, wie alle im folgenden erwähnten Lager als Wälzlager, beispielsweise als Nadellager oder Kugellager ausgebildet sein können, auf der kreiszylindrischen Außenfläche eines Rollenträgers 5 und konzentrisch zu dieser Außenfläche drehbar gelagert.

Der Rollenträger 5 weist Ausnehmungen und Hohlräume auf, in denen weitere Komponenten der erfindungsgemäßen Antriebsrolleneinheit 99 untergebracht sind, wie dies im folgenden noch genauer beschrieben wird.

Wie die Fig. 3 zeigt, ist der Rollenträger 5 in einer im dargestellten Querschnitt U-förmigen, nach oben offenen Halgerung 7 mit Hilfe von Lagern 9 gelagert. Das in der Fig. 3 linke Lager 9 stützt sich auf einem an der Halterung 7 starr befestigten Achsstummel 10 ab, während das in der Fig. 3 rechte Lager an einer Welle 11 abgestützt ist, die ihrerseits an ihrem äußersten rechten Ende vermittels eines Lagers 12 bezüglich der Halterung 7 drehbar gelagert ist. Die Mittel- bzw. Drehachsen des Achsstummels 10 und der Welle 11 fluchten miteinander und erstrecken sich parallel aber exzentrisch zur Achse der kreiszylindrischen Außenoberfläche des Rollenträgers 5. Wird also der Rollenträger 5 bezüglich der Halterung 7 gedreht, so schwenkt er zusammen mit den auf ihm gelagerten Antriebsrollen 1, 1' nach Art eines Exzenters aus der in der Fig. 3 gezeigten unteren Ruhestellung nach oben in die Antriebsstellung, in welcher die Antriebsrollen am Boden des Containers 100 angedrückt sind.

In der Mitte ihrer Unterseite ist die Halterung 7 fest mit einer Platte 14 verbunden, die ihrerseits an einer vertikal nach unten abstehenden Welle 15 befestigt ist. Diese Welle 15 erstreckt sich durch eine vertikale Bohrung 16 einer Basis 18, in der sie über Lager 19 um ihre vertikale Achse drehbar gelagert ist. Zwischen der Unterseite der Platte 14 und der Oberseite der Basis 18 ist eine Vielzahl von Rollen angeordnet, die mit der Platte 14 und der Oberseite der Basis 8 eine Reibungsbremse 21 bilden, die jeder Drehbewegung der Halterung 7 bezüglich der Basis 8 ein definiertes Bremsmoment entgegensetzt, so daß eine solche Drehbewegung nur dann stattfindet, wenn das sie antreibende Drehmoment genügend groß ist, um das Bremsmoment der Bremse 21 zu überwinden. Eine derartige als Rollenreibungsbremse ausgebildete Bremse 21 ist im einzelnen in der deutschen Patentanmeldung P 37 24 126.5 beschrieben, auf die hiermit ausdrücklich zum Zwecke der Offenbarung Bezug genommen wird.

In einem in der Fig. 3 auf der rechten Seite wiedergegebenen Hohlraum des Rollenträgers 5 ist eine Elektromotoranordnung 25 untergebracht, die mit dem Rollenträger 5 fest verbundene Statorwicklungen 26 aufweist, die in bekannter Weise mit engem radialem Abstand konzentrisch einen Rotor 27 umschließen. Der Rotor 27 ist mit der Welle 11 drehfest verbunden und über diese und das Lager 12 in der Halterung 7 bezüglich der kreiszylindrischen Außenfläche des Rollenträgers 5 exzentrisch drehbar gelagert.

Der sich in der Fig. 3 nach links erstreckende Teil der Welle 11, der über ein Lager 29 drehbar am Rollenträger 5 abgestützt ist, treibt entweder direkt oder falls erforderlich über ein in der Fig. 3 nur schematisch angedeutetes Untersetzungsgetriebe 30 ein das DrehmomentEingangsglied eines Ausgleichs- oder Differentialgetriebes 31 bildendes Tellerrad 32 an. Dieses Tellerrad 32 ist über Ausgleichszahnräder, von denen in der Fig. 3 nur zwei, nämlich die Ausgleichszahnräder 33 und 34 dargestellt sind, in der bei Differentialgetrieben üblichen Weise mit einem zweiten Tellerrad 35 antriebsmäßig verbunden. Da der Aufbau und die Funktionsweise eines derartigen Differentialgetriebes dem Fachmann bekannt sind, wird nachstehend hier nur eine kurze Erläuterung gegeben.

Die Ausgleichszahnräder 33, 34 sind jeweils über eine Welle 36 bzw. 37 und ein Lager 38 bzw. 39 in einem Gehäuse 40 des Differentialgetriebes 31 drehbar gelagert, das seinerseits über ein Lager 41 auf der Welle 11 drehbar abgestützt ist. Die Wellen 36 und 37 erstrecken sich durch das Gehäuse 40 hindurch nach außen und sind dort mit einer Platte 43 bzw. 44 verbunden, zwischen der und dem Gehäuse 40 jeweils eine schematisch angedeutete Reibungsbremse 45 bzw. 46 vorgesehen ist. Entsprechendes gilt auch für die beiden übrigen in der Fig. 3 nicht dargestellten Ausgleichszahnräder. Die Reibungsbremsen 45 und 46 erzeugen (ebenso wie die nicht dargestellten Reibungsbremsen an den nicht dargestellten Ausgleichszahnrädern) jeweils ein definiertes Bremsmoment bezüglich des Gehäuses 40, so daß sich in einem ersten Betriebszustand (der ebenso wie ein hiervon abweichender zweiter Betriebszustand weiter unten näher erläutert wird), eine quasi "starre" Antriebsverbindung zwischen den beiden Tellerrädern 32 und 35 und dem Gehäuse 40 ergibt, bei der sich alle diese Elemente gemeinsam, d.h. mit gleichem Drehsinn und gleicher Drehgeschwindigkeit um die durch die Welle 11 und den Achsstummel 10 definierte Rotationsachse drehen.

In der Fig. 3 befindet sich das Ausgleichsgetriebe 31 ungefähr in der Mitte zwischen den beiden Antriebsrollen 1 und 1'. Ein erstes Antriebszahnrad 48 ist fest mit dem Gehäuse 40 des Ausgleichsgetriebes 31 verbunden und steht kämmend mit einem Innenzahnkranz 49 im Eingriff, der in der Nähe des linken axialen Stirnendes an der inneren Oberfläche des hohlen Rollenkörpers 2 der Antriebsrolle 1 konzentrisch zu diesem Rollenkörper 2 ausgebildet ist. In entsprechender Weise ist ein zweites Antriebszahnrad 50 mit dem zweiten Tellerrad 35 fest verbunden und steht in kämmendem Eingriff mit einem Innenzahnkranz 49', der in der Nähe des rechten axialen Stirnendes an der inneren Oberfläche des hohlen Rollenkörpers 2' der Antriebsrolle 1' konzentrisch zu diesem Rollenkörper 2' ausgebildet ist.

Die Drehachsen der beiden Antriebszahnräder 48, 50 fallen mit der durch die Welle 11 definierten Drehachse zusammen und liegen somit exzentrisch zu der die Rotationsachse der Antriebsrollen 1, 1' bildenden Symmetrieachse der kreiszylindrischen Außenfläche des Rollenträgers 5. Bei dieser Anordnung ist der kämmende Eingriff der beiden Antriebszahnräder 48, 50 in den jeweils zugehörigen Innenzahnkranz 49 bzw. 49' stets auch dann sichergestellt, wenn der Rollenträger 5 aufgrund seiner exzentrischen Lagerung an der Halterung 7 bei einer Drehbewegung aus der in Fig. 3 wiedergegebenen unteren Ruhestellung nach oben in seine Arbeitsstellung schwenkt.

Das zweite Antriebszahnrad 50 ist über eine Welle 52, die sich auf seiner vom Differentialgetriebe 31 abgewandten Seite koaxial zur Welle 11 nach links erstreckt und im Rollenträger 5 mit Hilfe von zwei Lagern 53, 54 drehbar gelagert ist, mit einer Bremsscheibe 55 drehfest verbunden. Hierzu konzentrisch ist auf dem nach rechts weisenden Ende des Achsstummels 10 eine entsprechende Bremsscheibe 56 bezüglich der Halterung 7 drehfest montiert. Zwischen den beiden Bremsscheiben 55, 56 sind Bremsrollen 57 angeordnet. Die beiden Bremsscheiben 55,, 56 und die Bremsrollen 57 bilden zusammen eine in der EP-A-300 127 beschriebene, als Rollenreibungsbremse bezeichnete Reibungsbremse 58, die für das Antriebszahnrad 50 ein definiertes Bremsmoment bezüglich seiner Drehung relativ zur Halterung 7 liefert.

Für den oben bereits erwähnten ersten Betriebszustand, in welchem die Bremsmomente der Ausgleichszahnräder des Differentialgetriebes 31 nicht überwunden werden, so daß sich die beiden Antriebszahnräder 48, 50 gleichsinnig und mit der gleichen Geschwindigkeit drehen, kann man die in der Fig. 3 dargestellte Anordnung so betrachten, als ob die Rollenkörper 2, 2' der beiden Antriebsrollen 1, 1' drehfest miteinander verbunden wären und über einen einzigen Innenzahnkranz 49 oder 49' von einem einzigen Antriebszahnrad 48 oder 50 angetrieben würden, das seinerseits von der Elektromotoranordnung 25 angetrieben und über die Reibungsbremse 58 definiert abgebremst ist. In diesem Betriebszustand entspricht die Anordnung der Fig. 3 funktionmäßig der Antriebsrolleneinheit, wie sie in der EP-A-300 127 ausführlich beschrieben ist, deren Inhalt in vollem Umfang in die Offenbarung der vorliegenden Anmeldung einbezogen wird.

In dem gerade betrachteten ersten Betriebszustand arbeitet die Anordnung der vorliegenden Anmeldung also in der gleichen Weise wie die Antriebsrolleneinheit der EP-A-300 127:
Wenn ausgehend von der in der Fig. 3 wiedergegebenen Ruhestellung die Stromzufuhr zur Elektromotoranordnung eingeschaltet wird, so wirkt zwischen dem Rotor 27 und der von den Statorwicklungen 26 und dem Rollenträger 5 gebildeten Statoranordnung wie bei jedem anderen Elektromotor ein Drehmoment. Wegen der erheblichen Eigenträgheit des Rotors 27, der Eigenträgheit der Teile des Differentialgetriebes 31, (und gegebenenfalls des zwischengeschalteten Untersetzungsgetriebes 30), ferner der Eigenträgheit der von den Antriebszahnrädern 40, 50 und den Innenzahnkränzen 49, 49' gebildeten Getriebeanordnung und der Eigenträgheit der Antriebsrollen 1, 1', sowie der Reibungskräfte in der Getriebeanordnung und dem Differentialgetriebe 31, verharrt jedoch zunächst der Rotor 27 in Stillstand und das Drehmoment des Motors 25 bewirkt, daß sich die Statoranordnung 5, 26 entgegen der vorgesehenen Drehrichtung des Rotors 27 dreht. Wegen seiner exzentrischen Lagerung bezüglich der Halterung 7 schwenken der Rollenträger 5 und mit ihm die Antriebsrollen 1, 1' um die durch die Lagerung auf dem Achsstummel 10 und der Welle 11 definierte Drehachse nach oben, bis die Antriebsrollen 1, 1' an der Unterseite des Gegenstands, beispielsweise eines Containers 100 anstoßen, der sich auf einer Förderbahn befindet, in die, wie im Zusammenhang mit den Fig. 1 und 2 bereits erläutert wurde, die Antriebsrolleneinheit 99 eingebaut ist. Wegen des Gewichts dieses Containers 100 wird die nach oben gerichtete Schwenkbewegung der Antriebsrollen 1, 1' blockiert, so daß sich auch die Statoranordnung 5, 26 nicht mehr weiterdrehen kann. Dies hat zur Folge, daß sich nun entgegen den vorstehend erläuterten hemmenden Trägheits- und Reibungskräften der Rotor 27 in Drehung versetzt. Diese Drehung des Rotors 27 wird über die Welle 11 und das zunächst als direkte Verbindung wirkende Differentialgetriebe 31 auf die Antriebszahnräder 48, 50 gleichsinnig übertragen und die Antriebszahnräder 48, 50 treiben die Innenzahnkränze 49, 49' und damit die Antriebsrollen 1, 1' gleichsinnig an. Die Drehung der Antriebsrollen 1, 1', die gegen die Unterseite des Containers 100 angedrückt sind, übt eine Tangentialkraft auf den Container 100 aus, so daß sich dieser, wie in der Fig. 1 angedeutet, in Richtung des Pfeiles F in Bewegung setzt bzw. weiterbewegt.

Bei der obigen Aufzählung der Kräfte, die bei beginnender Stromzufuhr zur Elektromotoranordnung 25 im Ausgangszustand, in dem sich der Rollenträger 5 in seiner in der Fig. 3 gezeigten abgesenkten Ruhestellung befindet, zunächst den Rotor 27 der Elektromotoranordnung 25 festhalten, so daß sich die aus den Feldwicklungen 26 und dem Rollenträger 5 bestehende Statoranordnung 5, 26 drehen und exzentrisch nach oben schwenken muß, war das Bremsmoment der Reibungsbremse 58 unberücksichtigt geblieben, weil diese Reibungsbremse 58 erfindungsgemäß nicht unbedingt erforderlich ist. Sie ist jedoch vorteilhaft, weil sie für ein definiertes Bremsmoment sorgt, das auf den Rotor 27 beim Start einwirkt und dessen anfänglichen Stillstand beim Einschalten der Stromzufuhr zur Elektromotoranordnung 25 in der Ruhestellung der Antriebsrolleneinheit 99 unterstützt. Dadurch können Herstellungstoleranzen, Abnutzungserscheinungen und ähnliches für die Funktionstüchtigkeit der Antriebsrolleneinheit 99 außer Betracht bleiben, da ja die Reibungsbremse 58 in jedem Fall ein definiertes Bremsmoment zur Verfügung stellt. Ferner ist es durch diese Reibungsbremse 58 möglich, die Eigenträgheit des Rotors 27, des Differentialgetriebes 31, der Getriebeanordnung und der Antriebsrollen 1, 1' und damit auch deren Gewicht gering zu halten. Die Reibungsbremse 58 ist, wie schematisch angedeutet, als mechanische Reibungsbremse ausgebildet; beispielsweise kann sie als Rollenreibungsbremse aufgebaut sein, bei der zwischen zueinander drehbaren Bremsscheiben 55, 56 eine Vielzahl von Bremsrollen 57 federvorgespannt und über den Umfang der Bremsscheiben 55, 56 verteilt angeordnet sind, wie in der EP-A-300 127 beschrieben.

In diesem eben beschriebenen ersten Betriebszustand, in dem sich die beiden Antriebsrollen 1, 1' mit gleicher Geschwindigkeit und gleichsinnig drehen und so den Container 100 wie eine einzige Antriebsrolle vorwärts treiben, bleibt die erfindungsgemäße Antriebsrolleneinheit 99 so lange, bis der Drehbewegung der beiden Antriebsrollen 1, 1' vom Container so große Kräfte entgegengesetzt werden, daß die durch die Reibungsbremsen 45, 46 (und die nicht dargestellten Reibungsbremsen an den anderen Ausgleichsrädern) am Gehäuse 40 des Differentialgetriebes 31 aufgebrachten Bremsmomente überwunden werden. Dies geschieht beispielsweise dann, wenn sich der Container 100 nicht mehr in Richtung des Pfeiles F in der Fig. 1 weiterbewegen kann, weil er mit seinem vorderen Stirnende an der hinteren Seitenwand 95 des Laderaums 97 oder einem dort angeordneten Führungsanschlag anstößt.

Sobald aber die Reibungsmomente der Bremsen der Ausgleichszahnräder 33, 34 des Differentialgetriebes 31 überwunden werden, geht die erfindungsgemäße Antriebsrolleneinheit 99 in einen zweiten Betriebszustand über. In diesem zweiten Betriebszustand wird die quasi "starre" Kopplung zwischen den beiden Antriebszahnrädern 48 und 50 aufgehoben, und diese beiden Antriebszahnräder 48 und 50 beginnen nun, sich in entgegengesetzte Richtungen zu drehen, wie dies bei Differentialgetrieben, bei denen einer der Ausgänge festgehalten wird, dem Fachmann geläufig ist. Dabei behält das Antriebszahnrad 48 seine bisherige Drehrichtung bei, so daß sich die Antriebsrolle 1 im Sinne der bisherigen Vorwärtsbewegung des Containers 100 weiterhin vorwärts dreht, während das Antriebszahnrad 50 seine Drehrichtung umkehrt, so daß sich die Antriebsrolle 1' rückwärts zu drehen beginnt. Durch diese einander entgegengesetzten Drehbewegungen der beiden Antriebsrollen 1, 1', die an der Unterseite des Containers 100 abzurollen versuchen, entsteht ein Drehmoment um die vertikale Achse der Welle 15, das in zunehmendem Maße größer wird, weil die Elektromotoranordnung 25 durch entsprechend höhere Stromaufnahme versucht, die Drehbewegung zwischen dem Rotor 27 und der Statoranordnung 5, 26 aufrechtzuerhalten. Wenn das Drehmoment um die vertikale Achse größer wird als das definierte Bremsmoment der Reibungsbremse 21, die in ähnlicher Weise wie die oben erläuterte Reibungsbremse 58 aufgebaut sein kann, so dreht sich die Antriebsrolleneinheit 99 in der Draufsicht der Fig. 1 und 2 ein Stück weit entgegen dem Uhrzeigersinn um die Welle 15. Durch diese neue Drehstellung, die nun entgegen dem Uhrzeigersinn aus der bisherigen Richtung heraus zur Längsachse des Frachtraums hin gerichtet ist, greifen auch am Boden des daraufliegenden Containers die Kräfte in einer entgegen dem Uhrzeigersinn gedrehten Richtung an, in der dem Container geringere Bremskräfte entgegenwirken. Dadurch übt der Container auch auf die Antriebsrolleneinheit geringere Reaktionskräfte aus, so daß die Bremsmomente der Reibungsbremsen 45, 46 wieder unterschritten werden und die Antriebsrolleneinheit in den ersten Betriebszustand zurückfällt. Dadurch drehen sich die beiden Antriebsrollen 1, 1' wieder gleichsinnig in der gleichen Richtung und treiben den Container 100 in der neuen schräggestellten Richtung vorwärts, wobei er mit seiner vorderen rechten Kante an der Laderaumseitenwand 95 entlanggleitet und sich dabei in Richtung der Pfeile U dreht, wie dies in der Fig. 2 gezeigt ist.

Wenn also der Container 100 durch diese neue Drehstellung der Antriebsrolleneinheit an der Seitenwand 95 entlanggleiten kann, ist er in seiner Bewegung nicht mehr vollständig blockiert und seine Bremswirkung auf die Antriebsrollen 1, 1' ist so stark vermindert, daß die Bremsmomente der Reibungsbremsen 45, 46 der Ausgleichszahnräder des Differentialgetriebes 31 unterschritten wird. Es stellt sich also wieder der erste Betriebszustand ein, in dem sich die Antriebsrollen 1, 1' wieder gleichsinnig drehen, wobei jedoch die Antriebsrolleneinheit 99 ihre gegenüber der ursprünglichen Antriebsrichtung gemäß dem Pfeil F in der Fig. 1 entgegen dem Uhrzeigersinn verdreht ist und diese Stellung zunächst beibehält. Der Container 100 wird in dieser neuen Richtung durch die im ersten Betriebszustand arbeitende Antriebsrolleneinheit 99 so lange vorgeschoben, bis er mit seiner rechten vorderen Kante an der Seitenwand 95 wieder so stark abgebremst wird, daß auch die Antriebsrollen 1, 1' wieder derart stark abgebremst werden, daß die Antriebsrolleneinheit 99 in der gleichen Weise in den zweiten Betriebszustand übergeht, wie dies bereits oben erläutert wurde. Dadurch dreht sie sich wiederum um ein weiteres Stück entgegen dem Uhrzeigersinn. In dieser neuen Drehstellung nimmt die Bremswirkung des Containers 100 wiederum ab, da er sich in der neuen Antriebsrichtung erneut an der hinteren Seitenwand 95 entlangbewegen und dabei in Richtung der Pfeile U drehen kann. Die Antriebsrolleneinheit 99 geht dadurch wieder in den ersten Betriebszustand zurück und treibt den Container 100 in der neuen Drehstellung an, bis er wieder stark abgebremst wird. Der beschriebene Wechsel zwischen dem ersten und dem zweiten Betriebszustand wiederholt sich mehrfach, bis die Längsachse des Containers 100 schließlich parallel zur Flugzeuglängsachse 94 bzw. zur hinteren Seitenwand 95 verläuft und der Container 100 in dieser Richtung im Laderaum 97 ungehindert an die gewünschte Stelle bewegt werden kann.

Wenn die Stromzufuhr zur Elektromotoranordnung 25 kurz bevor sich der Container 100 von der Antriebsrolleneinheit 99 herunterbewegt hat, abgeschaltet wird, so kommt der Rotor 27 zum Stillstand und der Rollenträger 5 und die auf ihm gelagerten Antriebsrollen 1, 1' sinken aufgrund ihres exzentrisch gelagerten Eigengewichts durch Schwenkbewegung um die Welle 11 herum wieder nach unten in die in der Fig. 3 gezeigte Ruhestellung, in der die Antriebsrollen 1, 1' die Unterseite des Containers 100 nicht mehr berühren.

Die Rückdrehung der Antriebsrolleneinheit aus ihrer nun etwa quer zur Flugzeuglängsachse 94 liegenden Stellung in die Ausgangsstellung kann in beliebiger Weise herbeigeführt werden. Dem Fachmann steht hier eine Vielzahl von Möglichkeiten offen. Beispielsweise kann die Rückdrehung durch eine in der Zeichnung nicht dargestellte Feder erfolgen, welche die Antriebsrolleneinheit 99 zur Rückkehr in die Ausgangsstellung gemäß Fig. 1 vorspannt. Diese Feder wirkt im Sinne einer Drehung im Uhrzeigersinn um die Welle 15. Falls eine derartige Rückholfeder verwendet wird, kann gegebenenfalls auf die Reibungsbremse 21 an der Welle 15 verzichtet werden, da deren Bremsmoment dann von der Rückholfeder aufgebracht wird. Eine weitere Möglichkeit besteht darin, daß die nun quer zur Flugzeuglängsachse 94 stehende Antriebsrolleneinheit 99 durch den nächstfolgend einzuladenden Container zurückgedreht wird. Wenn nämlich der nächste Container auf die um 90° gedrehte Antriebsrolleneinheit 99 auftrifft, bremst er mit seiner Bodenwand zunächst nur die eine Antriebsrolle 1 ab, während die andere Antriebsrolle 1' vom Container noch nicht berührt wird. Dadurch fällt die Antriebsrolleneinheit in den zweiten Betriebszustand und dreht sich in ihre Anfangsstellung zurück.

Bei der vorstehend beschriebenen schematischen Prinzipdarstellung handelt es sich um eine Antriebsrolleneinheit 99, bei der beide Antriebsrollen 1, 1' auf einem gemeinsamen Rollenträger 5 koaxial gelagert sind, in den die Elektromotoranordnung exzentrisch eingebaut ist, die sowohl die Hub- bzw. Schwenkbewegung am Anfang unmittelbar nach dem Einschalten des Stromes bewirkt, als auch die Antriebsdrehbewegung der Antriebsrollen 1, 1' in den beiden Betriebszuständen, sowie auch die Drehbewegung der Antriebsrolleneinheit 99 um die vertikale Achse der Welle 15. Es sei aber ausdrücklich betont, daß im Rahmen des Erfindungsgedankens auch andere Ausführungen möglich sind.

Das erfindungsgemäße Prinzip verlangt nur, daß zwei gemeinsam von unten gegen den zu bewegenden Gegenstand, den Container 100, andrückbare Antriebsrollen 1, 1' von einer Elektromotoranordnung über ein Differentialgetriebe mit gebremsten Ausgleichszahnrädern in der beschriebenen Weise antreibbar sind und daß die die beiden Antriebsrollen tragende Halterung um eine vertikale Achse drehbar gelagert ist.

Es ist also durchaus möglich, das zum Anheben der Antriebsrollen 1, 1' erforderliche Drehmoment auf andere Weise zu erzeugen und auf die Antriebsrollen zu übertragen. Dies kann auch unabhängig von der Erzeugung und Übertragung des für die Rollendrehung um die vertikale Achse erforderlichen Drehmoments geschehen. Der oder die für den Antrieb der Rollenantriebseinheit erforderlichen Elektromotoren können auch außerhalb der Antriebsrollen angeordnet sein und sich bei der Drehung um die vertikale Achse mitbewegen oder auch nicht. Wichtig ist nur, daß die Übertragung des oder der Antriebsmomente in jeder Winkelstellung der Antriebsrolleneinheit erfolgen kann. Die Außenform der Rollenkörper muß nicht notwendigerweise ein Kreiszylinder sein. Es sind durchaus auch konische Formen bzw. Kegelstümpfe oder tonnenförmig ballige Formen denkbar. Die Drehachsen der beiden Rollenkörper müssen weder miteinander fluchten noch zueinander parallel verlaufen. Auch die Außendurchmesser der Antriebsrollen müssen nicht unbedingt gleich groß sein. Wenn dies nicht der Fall ist, muß lediglich die Rolle mit dem kleineren Durchmesser aus der unteren Ruhestellung etwas stärker angehoben werden, als die Rolle mit dem größeren Durchmesser, damit beide Rollen in etwa gleichzeitig an der Unterseite des zu bewegenden Gegenstandes zur Anlage kommen. Auch die axialen Längen der beiden Antriebsrollen einer Antriebsrolleneinheit können unterschiedlich sein.

Das Untersetzungsgetriebe 30 kann, wie dies auch in der EP-A-300 127 beschrieben ist, als dreistufiges Planetengetriebe ausgebildet sein. Wenn ein Elektromotor verwendet wird, der die erforderlichen Drehmomente bei entsprechend niedrigen Drehzahlen abzugeben vermag, kann das Untersetzungsgetriebe auch völlig weggelassen werden.

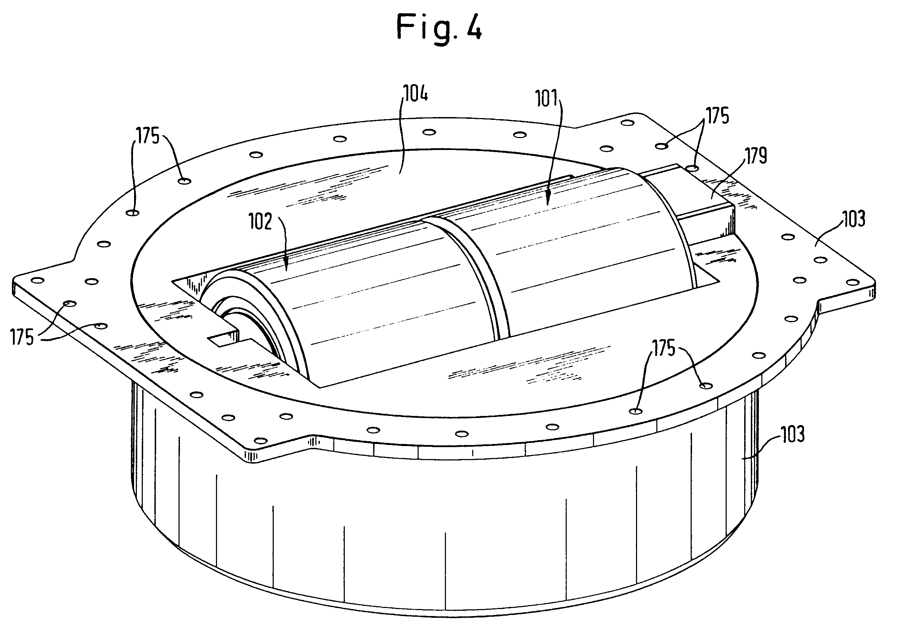

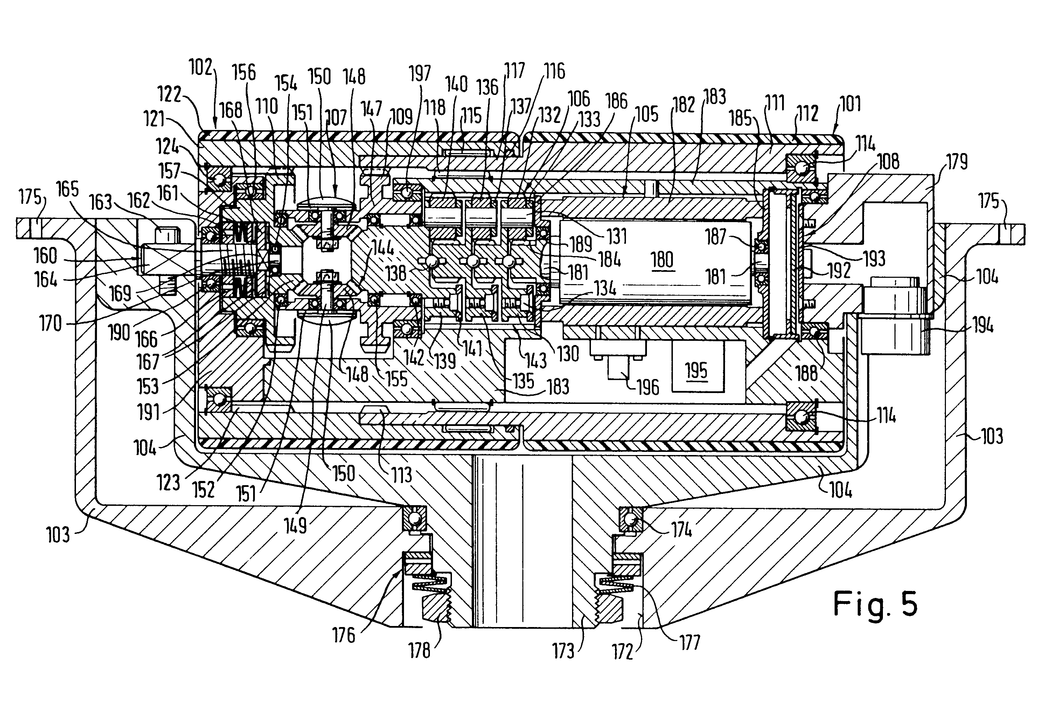

Nachstehend wird nun mit Bezug auf die Fig. 4 und 5 eine in vielen Einzelheiten vereinfacht dargestellte praktische Ausführungsform der erfindungsgemäßen Antriebsrolleneinheit beschrieben. Da diese Ausführungsform in vielen konstruktiven Details der in der EP-A-300 127 beschriebenen Rollenantriebseinheit ähnlich ist, wird hiermit ausdrücklich auf die Offenbarung dieser deutschen Patentanmeldung verwiesen, die als Bestandteil der gegenwärtigen Beschreibung betrachtet sein soll.

Wie die Fig. 4 und 5 zeigen, weist die Antriebsrolleneinheit zwei axial fluchtend konzentrisch nebeneinander angeordnete Antriebsrollen 101 und 102 auf, die um ihre gemeinsame horizontale Achse drehbar in einer Halterung 104 gelagert sind. Die Halterung 104 ist in Draufsicht kreisförmig ausgestaltet und in einem als Basis dienenden Gehäuse 103 um eine vertikale Achse drehbar gelagert. Dieses Gehäuse 103 ist topfförmig gestaltet und besitzt einen horizontalen Umfangsflansch mit Befestigungslöchern 175 zur Aufnahme von Bolzen und zur Verankerung in einem entsprechend geformten Ausschnitt im Boden eines Frachtladeraums.

Die Halterung 104 besitzt einen zentrisch nach unten ragenden Lagerstutzen 173, der mittels eines Wälzlagers 174 in einer zentralen Öffnung 172 des Gehäuses 103 um eine vertikale Achse drehbar gelagert ist. Dieser Drehbewegung um eine vertikale Achse setzt eine in der Öffnung 172 angeordnete Rollenreibungsbremse 176 ein vorbestimmtes Bremsdrehmoment entgegen, das durch die Vorspannung von Tellerfedern 177 mittels einer auf das untere Ende des Lagerstutzens 173 aufgeschraubten Mutter 178 einstellbar ist.

Wie insbesondere im axialen Längsschnitt der Fig. 5 gezeigt ist, umfaßt diese Ausführungsform der Antriebsrolleneinheit die beiden in etwa hohlzylindrisch ausgebildeten und axial nebeneinander angeordneten äußeren Antriebsrollen 101 und 102, eine im Innenraum dieser Antriebsrollen 101, 102 aufgenommene Elektromotoranordnung 105, ein sich links axial anschließendes Untersetzungsgetriebe 106 und ein wiederum sich links axial anschließendes Differentialgetriebe 107.

Die Elektromotoranordnung 105 umfaßt eine Statoranordnung aus einem die Statorwicklung umfassenden Statorkörper 182 und einem fest damit verbundenen Statorgehäuse 183, das als Rollenträger ausgebildet ist. Der Statorkörper 182 mit seiner Wicklung ist in herkömmlicher Weise in etwa rotationssymmetrisch aufgebaut und umgibt im geringen Abstand konzentrisch den Rotor 180. Das als Rollenträger ausgebildete Statorgehäuse 183 besitzt eine insgesamt etwa als Kreiszylinder ausgebildete Außenumfangsfläche und ist von einer zur Achse dieses Kreiszylinders exzentrischen Durchgangsbohrung durchsetzt. In dieser exzentrischen Durchgangsbohrung ist drehfest mit dem Statorgehäuse 183 verbunden der Statorkörper 182 aufgenommen, der sich jedoch nur durch den in der Fig. 5 rechten Teil dieser Durchgangsbohrung erstreckt. Nahe des in der Fig. 5 rechts gelegenen Endes der Bohrung ist eine radiale Lagerplatte 185 vorgesehen, die drehfest mit dem Statorgehäuse 183 verbunden ist und ein zum Rotor 180 konzentrisches Wälzlager 187 trägt. Axial gesehen außerhalb dieser Lagerplatte 185 ist angrenzend an das rechte axiale Ende des Statorgehäuses 183 innerhalb der Durchgangsbohrung ein weiteres Wälzlager 188 konzentrisch zum Wälzlager 187 angeordnet. Etwa in der Mitte der das Statorgehäuse 183 durchsetzenden Bohrung ist ferner eine weitere Lagerplatte 186 angeordnet, die ebenfalls drehfest mit dem Statorgehäuse 183 verbunden ist und ein zur Bohrung konzentrisches Wälzlager 189 trägt.

An der in der Fig. 5 linken Stirnfläche des Statorgehäuses ist bündig abschließend mit dieser mittels in der Zeichnung nicht dargestellter Bolzen ein radialer Lagerflansch 191 befestigt, der zentrisch zur Längsachse der Bohrung des Statorgehäuses 183 ein Wälzlager 190 trägt, das zur Lagerung des Statorgehäuses 183 auf einem an der Halterung 104 verankerten Lagerzapfen 160 dient.

Das Wälzlager 188 an der rechten Stirnseite des Statorgehäuses 183 sitzt auf einem Lagerbock 179, so daß die gesamte Statoranordnung 182, 183 auf diesem Lagerbock 179 einerseits und auf dem Lagerzapfen 160 andererseits drehbar gelagert ist. Der Lagerbock 179 ist fest mit der Halterung 104 verbunden.

Der Lagerzapfen 160 am linken Ende des Statorkörpers 182 ist mit einem nach außen (nach links in der Fig. 5) ragenden Vierkantansatz 164 ausgestattet, der mittels einer Schraube 163 drehfest an der Halterung 104 verankert ist.

Innerhalb des drehfest mit dem Statorgehäuses 183 verbundenen Statorkörpers 182 ist in herkömmlicher Weise der Rotor 180 der Elektromotoranordnung 105 aufgenommen. Dieser Rotor 180 sitzt zentrisch und drehfest auf einer Rotorwelle 181, die sich an beiden axialen Stirnseiten des Rotorkörpers 182 über diesen hinaus erstreckt. Das in der Fig. 5 links nach außen ragende Ende der Rotorwelle 181 ist mittels des Wälzlagers 189 drehbar bezüglich des Statorgehäuses 183 gelagert, während der rechts aus dem Rotorkörper herausragende Teil der Rotorwelle 181 mittels des Wälzlagers 187 drehbar in der Durchgangsbohrung des Statorgehäuses 183 gelagert ist.

Vereinfacht dargestellt ist die Kontaktanordnung 108 zur Stromzufuhr an die Elektromotoranordnung 105. Eine konstruktiv ähnliche Kontaktanordnung ist im einzelnen in der EP-A-300 127 beschrieben, auf die hiermit wegen der Einzelheiten verwiesen ist. Kurz erläutert, besteht diese Kontaktanordnung 108 im vorliegenden Fall aus einer am rechten Ende in der Durchgangsbohrung des Statorgehäuses 183 und fest mit diesem verbundenen Schleifbahnträger 192, sowie einem parallel zu diesem axial nach rechts versetzten und am Lagerbock 179 und somit an der Halterung 104 festgelegten Kontaktträger 193. Der Schleifbahnträger trägt auf seiner in der Fig. 5 axial rechten Oberfläche eine Vielzahl von Schleifbahnen, die elektrisch mit den entsprechenden Anschlüssen der Elektromotoranordnung fest verbunden sind und sich mit dieser drehen. Die linke Axialseite des Kontaktträgers 193 hingegen ist mit federnd an die Schleifbahnen angedrückten Kontakten ausgestattet, die elektrisch mit einem im Lagerbock 179 untergebrachten Stecker 194 verbunden sind, über den mit einer lösbaren Steckanordnung die Energiezufuhr erzielbar ist.

Wie aus der Fig. 5 zu sehen ist, ist das Statorgehäuse 183 im Bereich der Elektromotoranordnung 105 überdies mit einem weiteren Hohlraum bzw. einer Aussparung versehen, die einerseits zur Gewichtsverminderung dient und in der andererseits gegebenenfalls Bauelemente wie ein Relais 195 und ein Thermoschutzschalter 196 aufgenommen werden können.

Die beiden Antriebsrollen 101 und 102 sind jeweils im wesentlichen als hohle Kreiszylinder ausgebildet und umgeben den Statorkörper 182 konzentrisch. Die in der Fig. 5 rechts angeordnete erste Antriebsrolle 101 besteht aus einem Rollenmantel 112 aus abriebfestem elastischem Material und einem diesen Rollenmantel tragenden Rollenkörper 111 aus Metall. Der Rolienkörper 111 besitzt an seinem in der Fig. 5 linken Bereich einen Abschnitt verminderten Durchmessers 117, wobei am linken axialen Ende an der Innenseite dieses Abschnitts 117 mit vermindertem Durchmesser ein Innenzahnkranz 113 geformt ist. Die erste Antriebsrolle 101 ist im Bereich ihres Abschnitts 117 verminderten Durchmessers mit einem Nadellager 118 auf der Außenseite des Statorkörpers 182 gelagert und an ihrem in der Fig. 5 rechten axialen Ende mit einem Wälzlager 114 auf der darunter befindlichen Außenoberfläche des Statorgehäuses 183.

Die in der Fig. 5 links gelegene zweite Antriebsrolle 102 besteht ebenfalls aus einem Rollenmantel 122, der auf einem Rollenkörper 121 sitzt. Es sind die gleichen Materialien vorgesehen wie bei der ersten Antriebsrolle 101. Der Rollenmantel 122 der zweiten Antriebsrolle 102 besitzt einen in der Fig. 5 rechts gelegenen Abschnitt verminderter Dicke, mit dem der Abschnitt 117 verringerten Durchmessers der ersten Antriebsrolle 101 überlappt ist. Der Rollenmantel 122 ist mittels eines Nadellagers 115 auf der Außenseite des Abschnitts 117 verringerten Durchmessers der ersten Antriebsrolle drehbar gelagert und mit einem Dichtring 116 gegen das Eindringen von Feuchtigkeit und/oder Verschmutzungen abgedichtet. An dem in der Fig. 5 linken Stirnende ist die zweite Antriebsrolle 102 mittels eines Wälzlagers 124 drehbar auf dem fest mit dem Statorgehäuse 183 verbundenen Lagerflansch 191 gelagert.

Beide Antriebsrollen 101 und 102 sind also konzentrisch zueinander drehbar auf dem Statorgehäuse 183 gelagert, und können gleichzeitig eine Relativdrehung zueinander ausführen.

Ausgehend vom Wäzlager 124 nach rechts in der Fig. 5 ist an der Innenfläche des Rollenkörpers 121 der zweiten Antriebsrolle 102 ein Innenzahnkranz 123 geformt, der mit dem zweiten Antriebszahnrad 110 in kämmendem Eingriff steht.

Innerhalb der das Statorgehäuse 183 exzentrisch durchsetzenden Bohrung ist in der Fig. 5 links von der die Rotorwelle 181 lagernden Lagerplatte 186 als Untersetzungsgetriebe 106 ein Planetengetriebe mit drei in Axialrichtung aufeinanderfolgenden Getriebestufen vorgesehen. Dieses Planetengetriebe ist von seiner Funktion her in herkömmlicher Weise aufagebaut, so daß für den Fachmann die kurze folgende Beschreibung genügen wird. Der Aufbau des Planetengetriebes ist überdies dem Planetengetriebe ähnlich, wie es in der EP-A-300 127 beschrieben ist.

Das Planetengetriebe umfaßt in der von rechts in der Fig. 5. gesehen ersten Stufe einen ersten Planetenträger 130, der an seiner rechten Stirnseite mittels Bolzen 134 fest mit einer radialen Lagerscheibe 133 verbunden ist. In dieser Lagerscheibe 133 und einem axial gegenüberstehenden Lagerflansch des ersten Planetenträgers 130 sind auf Wellen 131 drei Planetenräder 132 gelagert, die auf einem Sonnenrad umlaufen, welches durch eine Außenverzahnung 184 auf dem linken Ende der Rotorwelle 181 gebildet ist.

Das Sonnenrad der in der Fig. 5 axial nach links folgenden zweiten Getriebestufe ist einstückig mit dem Planetenträger 130 der ersten Stufe als Außenverzahnung ausgebildet. Der Planetenträger 135 der zweiten Stufe ist wiederum mittels Bolzen 134 mit einer radialen Lagerscheibe 137 fest verbunden und die Planetenräder 136 der zweiten Stufe sind auf Wellen 131 einerseits in der Lagerscheibe 137 und andererseits in dem gegenüberliegenden radialen Flansch des Planetenträgers 135 drehbar gelagert und laufen auf der Außenverzahnung des ersten Planetenträgers 130 als dem Sonnenrad der zweiten Getriebestufe um.

Das Sonnenrad der dritten Getriebestufe ist wiederum auf einer axial nach links verlaufenden einstückigen Verlängerung des Planetenträgers 135 der zweiten Getriebestufe als Außenverzahnung ausgebildet. Der Planetenträger 139 der dritten Getriebestufe ist wiederum über Bolzen 134 mit einer radialen Lagerscheibe 141 fest verbunden und die Planetenräder 140 der dritten Getriebestufe sind auf Wellen 131 einerseits in der Lagerscheibe 141 und andererseits in einem gegenüberstehenden radialen Flansch des dritten Planetenträgers gelagert und laufen auf der Außenverzahnung des zweiten Planetenträgers 135 der zweiten Planetenstufe als dem Sonnenrad der dritten Getriebestufe um.

Im gesamten Bereich dieses Untersetzungsgetriebes 106 ist die Innenwand der exzentrischen Durchgangsbohrung des Statorgehäuses 183 mit einer Innenverzahnung 143 ausgestattet, die mit den Planetenrädern 132, 136 und 140 als Kronenrad kämmt. Bei dieser Ausbildung ist also das gemeinsame Kronenrad der drei Getriebestufen des Planetengetriebes einstückig mit dem Statorgehäuse 183 ausgebildet, so daß sich eine Gewichtseinsparung ergibt und weniger einzelne Teile vorliegen.

Zur Verminderung der Reibung zwischen den einzelnen Getriebestufen ist jeweils zwischen dem in der Fig. 5 links gelegenen Stirnende des jeweiligen Sonnenrads und dem nächstgelegenen Teil, beispielsweise dem nächsten Planetenträger eine Lagerkugel 138 angeordnet.

Wie in der Fig.5 gezeigt ist, ist der Planetenträger 139 der dritten Planetenstufe nabenartig axial nach links verlängert. Dieser nabenartige Teil des Planetenträgers 139 ist mittels der Wälzlager 142 und 155 an der Innenoberfläche eines den Nabenteil umgebenden Abschnitts des Differentialgehäuses 147 des in der Fig. 5 axial nach links folgenden Differentialgetriebes 107 gelagert. An dem in der Fig. 5 ganz links liegenden Ende des Nabenteils des dritten Planetenträgers 139 ist an der Umfangskante eine Kegelverzahnung geformt, welche das erste Tellerrad 144 des Differentialgetriebes 107 darstellt.

Das Differentialgetriebe 107 umfaßt in üblicher Weise vier im Differentialgehäuse 147 gelagerte Ausgleichskegelräder 148, die mit dem ersten Tellerrad 144 in kämmendem Eingriff stehen. Das Differentialgehäuse 147 ist an seinem in der Fig. 5 rechten Axialende über das Wälzlager 197 an der Innenfläche der das Statorgehäuse 183 durchsetzenden Bohrung gelagert. In der Zeichnung sind nur zwei dieser Ausgleichskegelräder 148 dargestellt, die mittels einer Welle 149 jeweils im Differentialgehäuse 147 drehbar gelagert sind, wobei auf der Außenseite des Differentialgehäuses 147 an der Welle 149 jeweils eine Reibplatte 150 angeordnet ist, welche das zugehörige Ausgleichskegelrad 148 über eine Bremse 151 gegenüber dem Differentialgehäuse 147 mit einem vorbestimmbaren Drehmoment abbremst.

An der in der Fig. 5 axial linken Seite stehen die Ausgleichskegelräder 148 in kämmendem Eingriff mit dem zweiten Tellerrad 153, das mittels eines Wälzlagers 152 an der Innenfläche des umgebenden Abschnitts des Differentialgehäuses 147 gelagert ist. Ferner ist dieses zweite Tellerrad 153 zentrisch mittels eines weiteren Wälzlagers 154 auf einem zylindrischen Ansatz 170 am äußersten rechten Ende des Lagerzapfens 160 drehbar und koaxial zum Lagerzapfen 160 abgestützt. Das zweite Tellerrad 153 setzt sich in der Fig. 5 axial nach links als hohler Umfangsflansch 157 fort, der auf seiner Außenseite über Wälzlager 156 zentrisch in dem mit dem Statorgehäuse 183 fest verbundenen Lagerflansch 191 drehbar gelagert ist. Dieser hohle Umfangsflansch 157 besitzt einen Außenzahnkranz, der das mit dem Innenzahnkranz 123 der zweiten Antriebsrolle 102 kämmende zweite Antriebszahnrad 110 darstellt.

Zwischen dem in der Fig. 5 linken Ende des Untersetzungsgetriebes 106 und dem axial rechten Stirnendes des Differentialgetriebes 107 ist das Differentialgehäuse 147 mit einem radial nach außen ragenden Außenzahnkranz ausgestattet, der als erstes Antriebszahnrad 109 in kämmendem Eingriff mit der Innenverzahnung 113 der ersten Antriebsrolle 101 steht.

Ebenso wie bei der eingangs beschriebenen schematisierten Darstellung ist also das Differentialgehäuse über das erste Antriebszahnrad mit dem Innenzahnkranz der ersten Antriebsrolle gekoppelt, während das den zweiten Ausgang des Differentialgetriebes 107 darstellende zweite Tellerrad über seinen Außenzahnkranz als zweites Antriebszahnrad mit dem Innenzahnkranz 123 der zweiten Antriebsrolle gekoppelt ist.

Im linken Teil der Fig. 5 ist im Inneren des hohlen Umfangsflansches 157 des zweiten Tellerrades 153 eine Rollenreibungsbremse vorgesehen, wie sie in sehr ähnlicher Ausführung in der EP-A-300 127 beschrieben ist. Diese Rollenreibungsbremse übt zwischen dem fest mit dem Statorgehäuse 183 verbundenen Lagerflansch 191 und dem starr mit der Halterung 104 verbundenen Lagerzapfen 160 ein vorherbestimmbares und definiertes Bremsmoment aus. Im einzelnen umfaßt diese Rollenreibungsbremse eine im Inneren des Umfangsflansches 157 drehfest auf einem Vierkant 169 des Lagerzapfens 160 angebrachte Bremsscheibe 168 die sich an ihrer in der Fig. 5 rechten Stirnfläche über eine Vielzahl von Bremsrollen 167 an der ihr zugewandten Stirnfläche des zweiten Tellerrades 153 abstützt. Die in der Fig. 5 linke Stirnfläche der Bremsscheibe 168 liegt über eine weitere Anzahl von Bremsrollen 167 an einer Druckplatte 166 an, die lose drehbar einen zylindrischen Teil 165 des Lagerzapfens umgibt. Diese Druckplatte 166 ist über eine Vielzahl von Tellerfedern 161 und eine auf den zylindrischen Teil 165 aufgeschraubte Mutter 162 in axialer Richtung nach rechts vorgespannt. Damit sowohl die rechts von der Bremsscheibe 168 gelegenen Bremsrollen als auch die links von ihr gelegenen Bremsrollen durch Einstellen der Mutter 162 mit der gewünschten Druckkraft beaufschlagt werden können, sind sowohl die Bremsscheibe 168 als auch die Druckplatte 166 axial verschiebbar.

Da die Funktionsweise der vorstehend beschriebenen praktischen Ausführungsform identisch ist mit derjenigen der mit Bezug auf die Fig. 1 bis 3 beschriebenen Schemadarstellung, wird auf die dortigen Erläuterungen verwiesen.

## Patentansprüche

1. Antriebsrolleneinheit (99) zum Antrieb von Gegenständen (100) auf einer Förderbahn, mit wenigstens einer Antriebsrolle (1, 1'), die von einer Elektromotoranordnung (25) über eine Getriebeanordnung (30, 31, 48, 49, 49', 50) drehend antreibbar ist und in ihrer Antriebsstellung mit der Unterseite des anzutreibenden Gegenstands (100) im Eingriff steht, dadurch **gekennzeichnet,**
- daß zwei drehend antreibbare Antriebsrollen (1, 1') vorgesehen sind, die in ihrer Antriebsstellung mit der Unterseite des anzutreibenden Gegenstands (100) im Eingriff stehen,
- daß die beiden Antriebsrollen (1, 1') mit ihren Drehachsen im wesentlichen quer zur Antriebsrichtung des Gegenstands (100) und in ihrer Axialrichtung nebeneinander angeordnet sind,
- daß die Getriebeanordnung (30, 31, 48, 49, 49', 50) ein Differentialgetriebe (31) umfaßt, dessen Eingang (32) von der Elektromotoranordnung (25) angetrieben wird und dessen einer Ausgang (40) die eine Antriebsrolle (1) und dessen anderer Ausgang (35) die andere Antriebsrolle (1') antreibt,
- daß für wenigstens ein Ausgleichszahnrad (33, 34) des Differentialgetriebes (31) eine Bremse (45, 46) vorgesehen ist, die das Ausgleichszahnrad (33, 34) bezüglich des Gehäuses (40) des Differentialgetriebes (31) mit einem definierten Bremsmoment bremst, das so bemessen ist, daß sich die beiden Antriebsrollen (1, 1') so lange gleichsinnig drehen, solange sich der anzutreibende Gegenstand (100) im wesentlichen ungebremst bzw. ungehindert über die Antriebsrolleneinheit (100) hinwegbewegen kann, und
- daß die beiden Antriebsrollen (1, 1') und das Differentialgetriebe (31) in einer Halterung (7) montiert sind, die bezüglich der Basis (18) der Förderbahn um eine vertikale Achse drehbar gelagert ist.

2. Antriebsrolleneinheit nach Anspruch 1, dadurch **gekennzeichnet,** daß der Eingang des Differentialgetriebes (31) das eine (32) von zwei einander gegenüberliegenden Tellerrädern (32, 35) ist, die durch die Ausgleichszahnräder (33, 34) miteinander verbunden sind, daß das andere (35) der beiden Tellerräder (32, 33) den einen Ausgang des Differentialgetriebes (31) bildet, der die eine (1') der beiden Antriebsrollen (1, 1') antreibt, und daß das Gehäuse (40) des Differentialgetriebes (31) den anderen Ausgang des Differentialgetriebes (31) bildet,der die andere (1) der beiden Antriebsrollen (1, 1') antreibt.

3. Antriebsrolleneinheit nach Anspruch 1 oder 2, dadurch **gekennzeichnet,** daß eine Bremse (21) vorgesehen ist, die die Halterung (7) bei ihrer Drehung um die vertikale Achse bezüglich der Basis (18) der Förderbahn mit einem definierten Bremsmoment bremst.

4. Antriebsrolleneinheit nach einem der Ansprüche 1 bis 3, dadurch **gekennzeichnet,** daß die Drehachsen der beiden Antriebsrollen (1, 1') zueinander parallel sind.

5. Antriebsrolleneinheit nach Anspruch 4, dadurch **gekennzeichnet,** daß die Drehachsen der beiden Antriebsrollen (1, 1') miteinander fluchtend koaxial sind und daß die beiden Antriebsrollen (1, 1') die Außenform von Kreiszylindern mit gleichem Durchmesser besitzen.

6. Antriebsrolleneinheit nach einem der Ansprüche 1 bis 5, dadurch **gekennzeichnet,** daß die Elektromotoranordnung (25), die Getriebeanordnung (30, 31, 48, 49, 49', 50), das Differentialgetriebe (31) und die Bremse (45, 46) im Inneren der als Hohlkörper ausgebildeten Antriebsrollen (1, 1') angeordnet sind.

7. Antriebsrolleneinheit nach Anspruch 2, dadurch **gekennzeichnet,** daß der Rotor (27) der Elektromotoranordnung (25) über ein Untersetzungsgetriebe (30) und das Differentialgetriebe (31) einen mit einem Ausgang (35) des Differentialgetriebes gekoppelten Innenzahnkranz (49') einer Antriebsrolle (1') antreibt, und daß der andere Ausgang (40) des Differentialgetriebes (31) einen Innenzahnkranz (49) der anderen Antriebsrolle (1) antreibt.

8. Antriebsrolleneinheit nach einem der vorhergehenden Ansprüche, dadurch **gekennzeichnet,** daß die Antriebsrolleneinheit (99) derart ausgebildet ist, daß sich ihre beiden Antriebsrollen (1, 1') beim Einschalten der Elektromotoranordnung (25) selbsttätig aus einer unteren Ruhestellung in eine obere Antriebsstellung anheben, in der sie mit der Unterseite des anzutreibenden Gegenstands (100) im Eingriff stehen.

## Claims

1. A drive roller unit (99) for driving articles (100) on a conveyor track, comprising at least one drive roller (1, 1') which can be driven in rotation by an electric motor assembly (25) by way of a transmission means (30, 31, 48, 49, 49', 50), and which in its drive position is in engagement with the underside of the article to be driven (100), characterized in that
- two drive rollers (1, 1') are provided, which can be driven in rotation and which, in their drive position, are in engagement with the underside of the article (100) to be driven,
- the two drive rollers (1, 1') are arranged with their axes of rotation substantially transversely with respect to the direction of drive of the article (100) and in juxtaposed relationship in their axial direction,
- the transmission means (30, 31, 48, 49, 49', 50) includes a differential transmission (31) the input (32) of which is driven by the electric motor means (25) and one output (40) of which drives the one drive roller (1) and the other output (35) of which drives the other drive roller (1'),
- for at least one differential pinion (33, 34) of the differential transmission (31) is provided a brake (45, 46) which brakes said differential pinion (33, 34) with respect to the casing (40) of the differential transmission (31) with a defined braking moment of such a magnitude that the two drive rollers (1, 1') rotate in the same direction as long as the article (100) to be driven moves sustantially unbraked or unimpeded beyond the drive roller unit (99), and
- the two drive rollers (1, 1') and the differential transmission (31) are mounted in a holding means (7) mounted rotatably about a vertical axis with respect to the base structure (18) of the conveyor track.

2. A drive roller unit as set forth in claim 1, characterized in that the input of the differential transmission (31) is one (32) of two mutually oppositely disposed bevel pinions (32, 35) which are connected together by way of the differential pinions (33, 34), the other (35) of the two bevel pinions (32, 35) forming one output of the differential transmission (31) which drives one (1') of the two drive rollers (1, 1'), while the casing (40) of the differential transmission (31) forms the other output of the differential transmission (31) which drives the other (1) of the two drive rollers (1, 1').

3. A drive roller unit as set forth in claim 1 or 2, characterized in that a brake means (21) is provided which is adapted to brake the holding means (7) with a defined braking moment in its rotary movement about said vertical axis with respect to the base structure (18) of the conveyor track.

4. A drive roller unit as set forth in any of claims 1 to 3, characterized in that the axes of rotation of the two drive rollers (1, 1') are parallel to each other.

5. A drive roller unit as set forth in claim 4, characterized in that the axes of rotation of the two drive rollers (1, 1') are in mutually aligned coaxial relationship and in that the drive rollers (1, 1') are of the external shape of circular cylinders of the same diameter.

6. A drive roller unit as set forth in any of claims 1 to 5, characterized in that the electric motor means (25), the transmission means (30, 31, 48, 49, 49', 50), the differential transmission (31) and the brake means (45, 46) are arranged in the interior of the drive rollers (1, 1') which are in the form of hollow bodies.

7. A drive roller unit as set forth in claim 2, characterized in that the rotor (27) of said electric motor means (25) drives, by way of a step-down transmission (30) and the differential transmission (31), an internally toothed ring gear (49') of a drive roller (1'), said ring gear being coupled to an output (35) of the differential transmission (31) while the other output (40) of the differential transmission (31) drives an internally toothed ring gear (49) of the other drive roller (1).

8. A drive roller unit as set forth in any of the preceding claims, characterized in that said drive roller unit (99) is of such a configuration that, when the electric motor means (25) is switched on, the two drive rollers (1, 1') of the unit automatically lift out of a lower rest position into a raised drive position in which they are in engagement with the underside of the article (100) to be driven.

## Revendications

1. Unité d'entraînement à rouleaux (99), pour l'entraînement d'objets (100) sur un chemin de transport, avec au moins un rouleau d'entraînement (1, 1'), susceptible d'être entraîné en rotation par un agencement de moteur électrique (25), par l'intermédiaire d'un agencement de transmission (30, 31, 48, 49, 49', 50) et qui, dans sa position d'entraînement, reste en prise avec le côté inférieur de l'objet à entraîner (100), caractérisée
- en ce que sont prévus deux rouleaux d'entraînement (1, 1') susceptibles d'être entraînés en rotation, qui restent en prise, dans leur position d'entraînement, avec le côté inférieur de l'objet à entraîner (100),
- en ce que les deux rouleaux d'entraînement (1, 1') sont disposés avec leurs axes de rotation sensiblement transversalement à la direction d'entraînement de l'objet (100) et les uns à côté des autres dans leur direction axiale,
- en ce que l'agencement de transmission (30, 31, 48, 49 49', 50) comprend une transmission différentielle (31), dont l'entrée (32) est entraînée par l'agencement de moteur électrique (25) et dont une sortie (40) entraîne l'un des rouleaux d'entraînement (1) et dont la deuxième sortie (35) entraîne le deuxième rouleau d'entraînement (1'),
- en ce que, pour au moins une roue dentée de compensation (33, 34) de la transmission différentielle (31) est prévu un frein (45, 46), assurant le freinage de la roue dentée de compensation (33, 34) par rapport au boîtier (40) de la transmission différentielle (31), avec un couple de freinage défini, qui est ainsi dimensionné, que les deux rouleaux d'entraînement (1, 1') tournent dans le même sens, tant que l'objet à entraîner (100) peut se déplacer par l'intermédiaire de l'unité d'entraînement à rouleaux (100), pratiquement sans freinage, éventuellement sans entrave, et
- en ce que les deux rouleaux d'entraînement (1, 1') et la transmission différentielle (31) sont montés dans un support (7), qui est monté à rotation autour d'un axe vertical, par rapport à la base (18) du chemin de transport.

2. Unité d'entraînement à rouleaux selon la revendication 1, caractérisée en ce que l'entrée de la transmission différentielle (31) est l'une (32) de deux couronnes de différentiel (32, 35) se trouvant à l'opposé, reliées ensemble au moyen des roues dentées de compensation (33, 34), en ce que l'autre (35) des deux couronnes de différentiel (32, 35) forme une sortie de la transmission différentielle (31), entraînant l'un (1') des deux rouleaux d'entraînement (1, 1'), et en ce que le boîtier (40) de la transmission différentielle (31) forme l'autre sortie de la transmission différentielle (31), entraînant l'autre (1) des deux rouleaux d'entraînement (1, 1').

3. Unité d'entraînement à rouleaux selon la revendication 1 ou 2, caractérisée en ce qu'est prévu un frein (21) assurant le freinage, avec un couple de freinage défini, du support (7), lors de sa rotation autour de l'axe vertical par rapport à la base (18) du chemin de transport.

4. Unité d'entraînement à rouleaux selon l'une des revendications 1 à 3, caractérisé en ce que les axes de rotation des deux rouleaux d'entraînement (1, 1') sont parallèles l'un à l'autre.

5. Unité d'entraînement à rouleaux selon la revendication 4, caractérisée en ce que les axes de rotation des deux rouleaux d'entraînement (1, 1') sont en alignement mutuel coaxial et en ce que les deux rouleaux d'entraînement (1, 1') possèdent la forme extérieure de cylindres circulaires de même diamètre.

6. Unité d'entraînement à rouleaux selon l'une des revendications 1 à 5, caractérisée en ce que l'agencement de moteur électrique (25), l'agencement de transmission (30, 31, 48, 49, 49', 50), la transmission différentielle (31) et le frein (45, 46) sont disposés à l'intérieur des rouleaux d'entraînement (1, 1') réalisés sous forme de corps creux.

7. Unité d'entraînement à rouleaux selon la revendication 2, caractérisée en ce que le rotor (27) de l'agencement de moteur électrique (25) entraîne, par l'intermédiaire d'une transmission réductrice (30) et de la transmission différentielle (31), une couronne à denture intérieure (49'), couplée avec une sortie (35) de la transmission différentielle d'un rouleau d'entraînement (1'), et en ce que l'autre sortie (40) de la transmission différentielle (31) entraîne une couronne à denture intérieure (49) de l'autre rouleau d'entraînement (1).

8. Unité d'entraînement à rouleaux selon l'une des revendications précédentes, caractérisée en ce que l'unité d'entraînement à rouleaux (99) est réalisée de telle façon que, lors de la mise en service de l'agencement de moteur électrique (25), ses deux rouleaux d'entraînement (1, 1') se soulèvent automatiquement, hors d'une position de repos inférieure dans une position d'entraînement supérieure, dans laquelle les deux rouleaux d'entraînement restent en prise avec le côté inférieur de l'objet à entraîner (100).
